# EUROPÄISCHE PATENTSCHRIFT

(11) **EP 0 974 484 B1**
(45) Veröffentlichungstag und Bekanntmachung des Hinweises auf die Patenterteilung: **18.12.2002**
(21) Anmeldenummer: 99110165.0
(22) Anmeldetag: 26.05.1999
(51) Int. Cl.: B60N 2/48

(54) **Kopfstütze für Kraftfahrzeugsitze**
A headrest for motor verhicle seats
Appui-tête pour sièges de véhicules automobiles

(30) Priorität: 23.07.1998 DE 19833017
(43) Veröffentlichungstag der Anmeldung: 26.01.2000
(73) Patentinhaber: GRAMMER Automotive GmbH, 92224 Amberg (DE)
(72) Erfinder: Schäfers, Andreas, 40764 Langenfeld (DE); Pausch, Friedhelm, 42697 Solingen (DE); Werner, Hans-Georg, 40764 Langenfeld (DE)
(74) Vertreter: Patentanwälte Ostriga & Sonnet

(56) Entgegenhaltungen:
- EP-A- 0 826 553
- DE-A- 3 042 802
- DE-A- 3 109 592
- DE-A- 3 335 497
- DE-A- 3 900 495
- DE-A- 19 632 561
- US-A- 2 973 029
- US-A- 4 278 291
- US-A- 4 762 367
- US-A- 4 856 848

## Beschreibung

Die Erfindung betrifft eine Kopfstütze für Kraftfahrzeugsitze entsprechend dem Oberbegriff des Anspruchs 1. Eine solche durch die DE-A1-39 00 495 (s.dort Fig. 3) bekannte Kopfstütze soll durch eine gegebenenfalls zusätzlich bewegliche Kopfanlagefläche besondere Verhältnisse bei einem eventuellen Crash-Geschehen berücksichtigen.

Die Kopfstütze gemäß der DE-A1-39 00 495 gestattet, ohne zusätzliche sitzlehnenseitige Mittel zu benötigen, bei einem Crashgeschehen eine Verlagerung der kopfstützenseitigen Kopfanlagefläche nach vorn zum Hinterkopf des Fahrzeuginsassen.

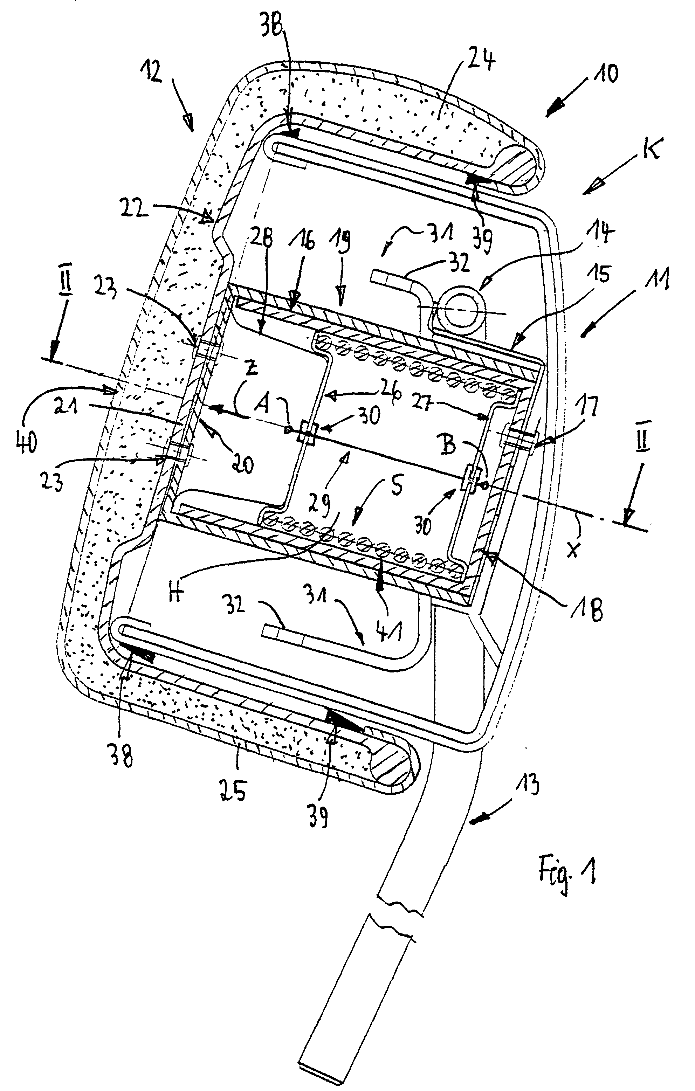

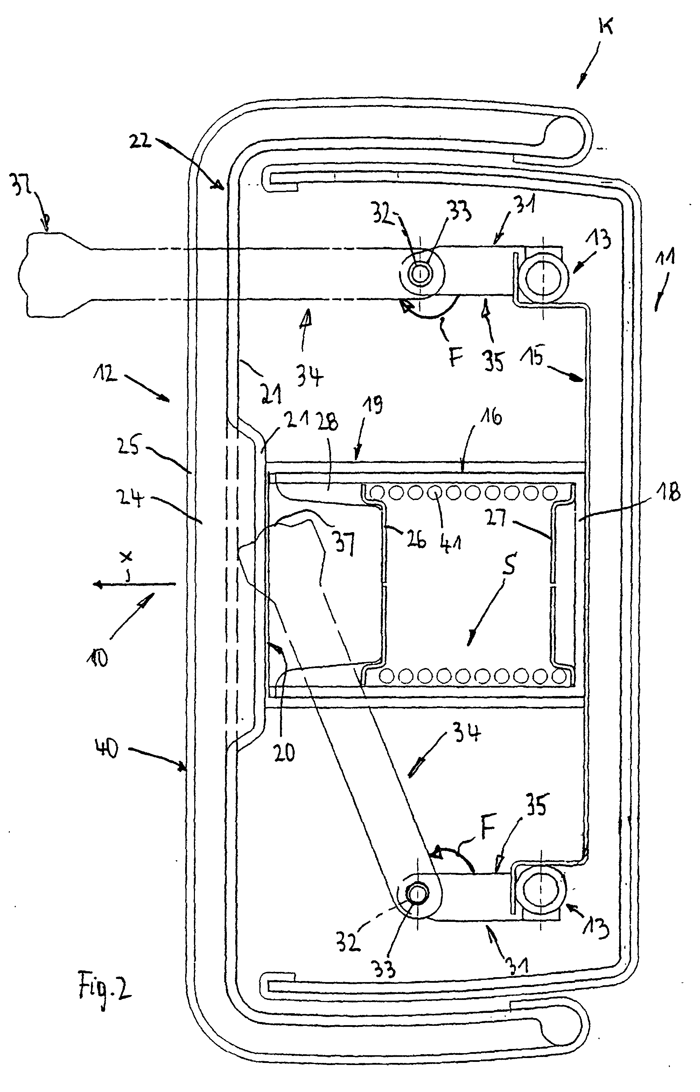

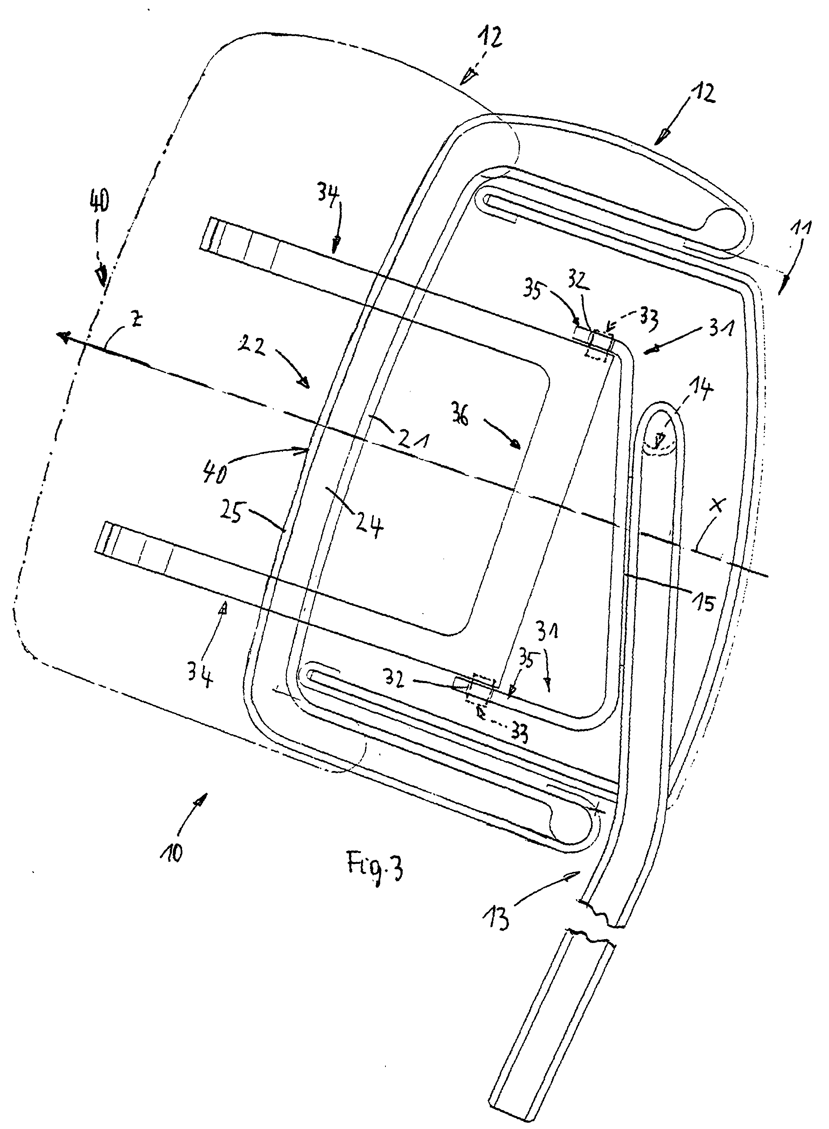

Die Kopfstütze gemäß der DE-A1-39 00 495 verwendet dazu ein im Hauptkörper der Kopfstütze nach vorn verschwenkbares oder linear nach vorn verschiebliches Kopfanlageteil (s. Fig. 3), welches, unterstützt durch die Entlastung eines vorgespannten Federspeichers, unter der Wirkung z.B. eines sich aufblähenden Airbags nach vorn bewegt wird.

Zudem gelangen bei der Kopfstütze gemäß der DE-A1-39 00 495 Mittel zum Einsatz, welche eine personenbezogene individuelle Annäherung der kopfstützenseitigen Kopfanlagefläche an den Hinterkopf des Fahrzeuginsassen durch eine gesonderte Horizontalverstellung der Kopfanlagefläche, z.B. bei Antritt der Fahrt, gestatten.

Die Kopfstütze gemäß der DE-A1-39 00 495 wird indessen als verbesserungsbedürftig empfunden, zumal sie mit einem erheblichen technischen Aufwand verbunden ist.

Gemäß einer CD-Rom "Autoliv's ANTIWIPLASH SEAT (AWS)" Copyright 1998, Autoliv Hammarverken AB (SE), ist der Bewegungsablauf eines Kfz-Sitzes mit Kopfstütze beim Crashfall gezeigt. Als Besonderheit fällt auf, daß sich aufgrund der crashbedingten Lasten die Sitzlehne über ihre Biegelinie nach hinten wegbewegt. Hierbei wird die Kopfstütze mitgenommen, derart, daß sich die kopfstützenseitige Kopfanlagefläche vom Hinterkopf des Fahrzeuginsassen wegbewegt, so daß folglich ein schädlicher zusätzlicher Beschleunigungsweg des Kopfes entsteht.

Gemäß der vorbezeichneten CD-Rom wird dieser durch die Eigenfederbewegung der Sitzlehne bedingte Beschleunigungsweg dadurch ausgeglichen, daß die Kopfstütze einschließlich ihrer in der Sitzlehne gehaltenen Tragstangen um eine in der Sitzlehne angeordnete Schwenkachse entgegen der Federbewegung der Sitzlehne nach vorn geschwenkt und dabei an den Hinterkopf des Fahrzeuginsassen angelegt wird.

Die gemäß der vorgenannten CD-Rom dargestellte Lösung wird, zumal sie eine besondere Konstruktion der Sitzlehne voraussetzt, als technisch sehr aufwendig empfunden.

Ausgehend Ausgehend von der Kopfstütze gemäß der DE-A1-39 00 495, liegt der Erfindung die Aufgabe zugrunde, eine Kopfstütze kompakter Bauform zu schaffen, welche die bei einem Crashgeschehen auftretenden nachteiligen Federeigenschaften einer Sitzlehne mit baulich einfacheren Mitteln als bisher berücksichtigt.

In Verbindung mit den Merkmalen des Oberbegriffs des Anspruchs 1 wird diese Aufgabe entsprechend den Merkmalen des Kennzeichenteils des Anspruchs 1 gelöst.

Merkmale der erfindungsgemäßen Lösung bestehen darin, daß das die kopfstützenseitige Kopfanlagefläche bildende Kopfanlageteil ausschließlich durch die Energieentlastung eines mechanischen Federspeichers nach vorn zum Hinterkopf des Fahrzeuginsassen bewegt wird. Dies bedeutet, daß die Erfindung sich auf die Energieentlastung eines mechanischen Energiespeichers beschränkt und nicht etwa eines zusätzlichen Airbags bedarf.

Dabei kann die Vorwärtsbewegung des Kopfanlageteils in bevorzugter Weise eine Linearbewegung sein.

Eine Linearbewegung wird zweckmäßig dadurch erzielt, daß zwei zylindrische, insbesondere kreiszylindrische, rohrartige Körper teleskopierend ineinander angeordnet sind und in ihrem zentralen Hohlraum einen Federspeicher, wie z.B. mindestens eine sich parallel zu den Rohrlängsachsen erstreckende, in Achsrichtung verspannbare Feder, wie z.B. eine Schraubendruckfeder od. dgl., aufnehmen. Der Federspeicher bzw. die Feder stützt sich dabei auf den einander entgegengesetzt und voneinander distanziert angeordneten Boden- bzw. Abstützflächen der beiden teleskopierend angeordneten Zylinderrohre ab.

Bevorzugt werden kreiszylindrische Zylinderrohre verwandt. Letztere nehmen eine einzige koaxial zu ihnen angeordnete Schraubendruckfeder, insbesondere eine zylindrische Schraubendruckfeder, auf.

Erfindungsgemäß sind weiterhin Mittel vorgesehen, welche den mechanischen Federspeicher in seiner gespannten Lage halten und denen Verriegelungsmittel zugeordnet sind, die mittels eines im Zusammenhang mit dem Crashgeschehen wirksamen Sensors entriegelt werden, so daß sich der Federspeicher entspannen und dabei das Kopfanlageteil in Richtung Hinterkopf bewegen kann.

Ein besonders vorteilhaftes Verriegelungsmittel für einen Federspeicher kann darin bestehen, daß dieser mittels eines metallenen Spanndrahts in seiner gespannten Stellung gehalten wird. Dieser Spanndraht wird bei einem Crashgeschehen von einem elektrischen Strom durchflossen, so daß die dabei entstehende Stromwärme den Spanndraht zum Schmelzen und Reißen bringt, worauf sich die Energie des mechanischen Federspeichers, verbunden mit einer Vorwärtsbewegung der Kopfanlagefläche, entladen kann.

In weiterer Ausgestaltung der Erfindung sind entweder im Hauptkörper der Kopfstütze oder in deren beweglichem Kopfanlageteil Stützmittel vorgesehen, welche zumindest bei Erreichen der am weitesten ausgefahrenen Relativposition der Kopfanlagefläche den Hauptkörper der Kopfstütze und das Kopfanlageteil mit dessen Kopfanlagefläche voneinander arretierend distanzieren.

Eine bevorzugte Ausführungsform der Erfindung besteht darin, daß innen am Hauptkörper oder am Kopfanlageteil mindestens ein bei Spannstellung des Federspeichers eingeschwenkter Schwenkarm vorgesehen ist, welcher bei Erreichen der ausgefahrenen Endlage des Kopfanlageteils durch Federwirkung in eine gestreckte Stützlage versetzt wird, die eine Wiederannäherung des Kopfanlageteils zum Hauptkörper verhindert. Dieses insbesondere für den Fall, daß der Kopf des Fahrzeuginsassen während des Crashgeschehens gegen die kopfstützenseitige Kopfanlagefläche zurückbewegt wird.

Zweckmäßig ist die erfindungsgemäße Kopfstütze mit der Möglichkeit einer Horizontalverstellung versehen. Dabei kann es sich um eine Horizontalverstellung handeln, bei welcher das Kopfanlageteil unter Einbeziehung des Federspeichers jeweils teilweise bzw. über einen Teil des Federweges entweder in dessen Spannsinn oder in dessen Entspannungsinn bewegt wird.

Andererseits sieht die Erfindung auch vor, das Kopfanlageteil mitsamt dem mit seiner maximalen Speicherenergie aufgeladenen Federspeicher, der sich einenends innen am Kopfanlageteil und andernends an einem mit dem Hauptkörper verbundenen Widerlager abstützt, gemeinsam mit dem Kopfanlageteil und dem Widerlager (welches sich wiederum unter Einbeziehung eines Horizontalverstellweges am Hauptkörper der Kopfstütze abstützt) in beiden Richtungen horizontal zu verstellen.

Darüber hinaus sieht die Erfindung die Möglichkeit vor, zwecks Horizontalverstellung die gesamte Kopfstütze bezüglich ihrer Basis (die z.B. von zwei Tragstangen gebildet sein kann) in horizontaler Richtung entweder zum Hinterkopf des Fahrzeuginsassen hin oder von diesem horizontal weg zu bewegen.

Eine Horizontalverstellung einer Kopfstütze insgesamt kann entsprechend der DE-C2-31 09 592 C2 oder beispielsweise entsprechend der DE 33 35 497 C2 ausgebildet sein.

Ein wichtiges Erfindungsmerkmal besteht darin, daß die Horizontalverstellung bei einem Crashgeschehen entweder von sich aus selbsttätig oder durch andere Mittel arretierbar ist.

Ein anderes wichtiges Erfindungsmerkmal besteht darin, daß eine gegebenenfalls vorhandene Höhenverstellung der Kopfstütze, sei diese kopfstützenintern oder sitzlehnenseitig vorhanden, bei einem Crashgeschehen selbsttätig oder durch andere Mittel arretierbar ist.

Die vorbezeichneten Arretierungsmittel der Horizontal- und/oder Höhenverstellung können indessen auch vor einem etwaigen Crashgeschehen bereits während des normalen Fahrbetriebs arretiert sein.

In weiterer Ausgestaltung der Erfindung wird anstelle des mechanischen Federspeichers ein mechanischer Energiespeicher eingesetzt, der eine im zentralen Hohlraum der beiden rohrartigen Körper angeordnete Kolben-Zylindereinheit aufweist, deren Zylinderinnenraum mindestens mittelbar von einem Speichermedium zur Bewegung des Kolben und/oder des Zylinders im Ausfahrsinne des Kopfanlageteils beaufschlagbar ist.

Diese erfindungsgemäße Ausbildung eines mechanischen Kraft- bzw. Energiespeichers gestattet hinsichtlich des Gewichts und der für den Ausfahrvorgang des Kopfanlageteils ggf. erforderlichen Energiedichte eine größere Variationsbreite als diese bei der Verwendung von Energiespeichern mit starren Federn, wie z.B. von Stahl-Schraubendruckfedern, erzielbar wäre.

So sieht die Erfindung beispielsweise vor, in verbindung mit einem Crashgeschehen den Zylinderinnenraum mindestens mittelbar von dem Gasstrom einer Gasquelle zu beaufschlagen. Der dabei aufgebaute Gasdruck kann, ähnlich wie bei einem entlasteten Federspeicher mit starren Federn, als Rücklaufsperre eingesetzt werden.

Weiterhin sieht die Erfindung vor, die Gasquelle der Kolben-Zylindereinheit unmittelbar zuzuordnen oder, falls es die Besonderheiten eines Anwendungsbeispiels erfordern, von der Kolben-Zylindereinheit entfernt anzuordnen.

Außerdem sieht die Erfindung vor, daß der Gasstrom in Verbindung mit einem Crashgeschehen unmittelbar auf den Zylinderinnenraum wirkt. Falls es Besonderheiten eines Einzelfalles erfordern, ist es auch möglich, den Gastrom unter Zwischenschaltung einer hydraulischen Verbindung auf den Zylinderinnenraum wirken zu lassen.

Bei der Gasquelle selbst kann es sich um einen vorgespannten Gasspeicher handeln; auch ist es möglich, daß die Gasquelle in Form chemisch gebundener Energie vorliegt.

Ein anderes Ausführungsbeispiel entsprechend der Erfindung sieht vor, daß die mechanische Wirkungsachse des Federspeichers oder des mechanischen Energiespeichers von der Linearbewegungsrichtung unterschiedlich ist und der Federspeicher oder der Energiespeicher über eine mechanische Bewegungskupplung mit dem Kopfanlageteil verbunden ist.

Bei Anwendung der vorgenannten Erfindungsmerkmale können der Federspeicher bzw. der mechanische Energiespeicher innerhalb der beiden rohrartigen Körper praktisch eine beliebige Einbaulage einnehmen, weil die Wirkverbindung zwischen dem Federspeicher bzw. dem mechanischen Energiespeicher und dem zu bewegenden Kopfanlageteil über eine mechanische Bewegungskupplung erfolgt.

Eine solche mechanische Bewegungskupplung kann zugleich so ausgestaltet sein, daß diese eine Bewegungs-Untersetzung oder Bewegung-Übersetzung enthält.

Für den Fall also, daß die Kolben-Zylindereinheit einen für die Ausfahrbewegung des Kopfanlageteils zu geringen Maximalhub aufweisen sollte, wird eine mechanische Bewegungskupplung eingesetzt, die zugleich eine Übersetzung der Antriebsbewegung des Feder- oder Energiespeichers gestattet.

Eine im Hinblick auf die Position des Fahrzeuginsassen optimale Ausgestaltung ist erfindungsgemäß so beschaffen, daß der bei einem Crashgeschehen wirksame Sensor sitzlehnenseitig in Höhe des Hüftgelenkdrehpunkts, nämlich des sogenannten H-Punkts, angeordnet ist.

In den Zeichnungen sind bevorzugte Ausführungsbeispiele entsprechend der Erfindung näher dargestellt, es zeigen
Fig. 1 einen Vertikalschnitt durch eine Kopfstütze mit aufgeladenem (gespanntem) Federspeicher,
Fig. 2 einen Horizontalschnitt entsprechend der Schnittlinie II-II in Fig. 1,
Fig. 3 in Anlehnung an die Darstellung gemäß Fig. 1 die Kopfstütze nach Entlastung bzw. nach Ausfahren des Federspeichers, und
Fig. 4 in Anlehnung an die Darstellung gemäß Fig. 1 eine Ausführungsform einer Kopfstütze mit aufgeladenem Energiespeicher.

Eine Kopfstütze 10 für Kraftfahrzeugsitze weist einen Kopfstützen-Hauptkörper 11 und ein relativ zu letzterem etwa entlang der aufwärts geneigten Achse x nach vorn in Richtung z bewegbares Kopfanlageteil 12 auf.

Die Kopfstütze 10 verfügt über eine Basis in Gestalt von zwei Tragstangen 13, welche in nicht näher gezeichneter Weise in einer nicht dargestellten Sitzlehne höhenverstell- und arretierbar sind. Die beiden rohrförmigen Tragstangen 13 sind mittels eines ebenfalls rohrförmigen Jochs 14 oben miteinander verbunden, welches mit dem hauptkörperseitigen Traggerüst 15 des aus Hauptkörper 11 und Kopfanlageteil 12 zusammengesetzten Kopfstützenkörpers K insbesondere starr verbunden ist.

An dem Traggerüst 15 ist ein kreiszylindrischer hohler Innenzylinder 16 mit seinem Innenzylinderboden 18 beispielsweise mittels Nietung 17 befestigt.

Der kreiszylindrische Innenzylinder 16 ist von einem kreiszylindrischen hohlen Außenzylinder 19 teleskopierend übergriffen, dessen Außenzylinderboden 20 an dem Boden 21 eines etwa topfförmigen Halteteils 22 beispielsweise mittels Nietung 23 befestigt ist. Das Halteteil 22 bildet Bestandteil des Kopfanlageteils 12.

Außen ist das etwa topfförmige Halteteil 22 von einer Polsterung 24 mit einem Bezugsstoff 25 umgeben.

Innerhalb des Innenzylinders 16 bzw. innerhalb des von Innenzylinder 16 und Außenzylinder 19 gebildeten zentralen Hohlraums H ist eine nahezu auf Block zusammengedrückte, also potentielle Federspeicherenergie beinhaltende, Speicherfeder 41, eine zylindrische Schraubendruckfeder, aufgenommen, welche sich endseitig auf zwei Stütz- bzw. Federtellern 26, 27 abstützt. Der die Bauteile 26, 27 und 41 aufweisende Federspeicher ist mit S bezeichnet.

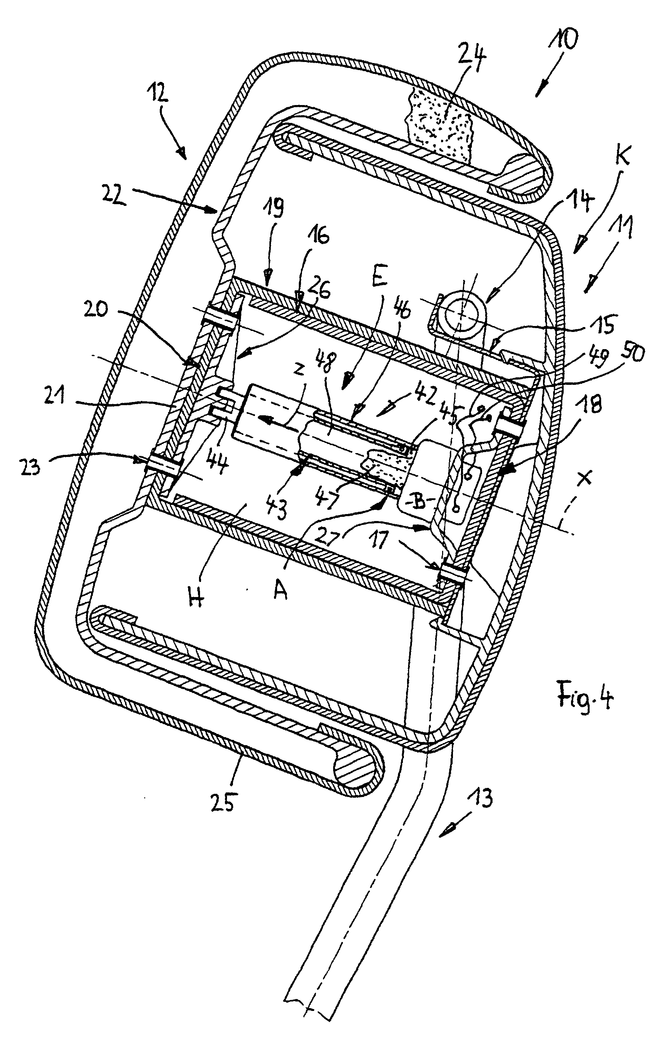

Der Stütz- bzw. Federteller 27 stützt sich innenseitig auf dem Innenzylinder-Boden 18 ab, während sich der Stütz- bzw. Federteller 26 unmittelbar (Fig. 4) oder mittels eines Zwischenteils 28 (Fig. 1 und 2) innen auf dem Außenzylinder-Boden 20 abstützt.

Zwischen den beiden Stütz- bzw. Federtellern 26, 27 ist ein nur in Fig. 1 dargestellter metallener Spanndraht 29 angeordnet, welcher die beiden Stütz- bzw. Federteller 26, 27, letztere gegeneinander arretierend, in Isolierstoffbuchsen 30 durchsetzt. In schematischer Weise ist in Fig. 1 gezeigt, daß der Spanndraht 29 außenseitig zwei elektrische Klemmen L und M aufweist, über welche ein Stromkreis, insbesondere ein Gleichstromkreis, kurzgeschlossen werden kann.

Das Kurzschließen des Stromkreises erfolgt bei Crashbedingungen dadurch, daß ein crashempfindlicher Sensor ein Schaltsignal an eine Steuereinheit, beispielsweise an ein Relais, weitergibt. Die Steuereinheit speist sodann in die beiden Klemmen L und M den erwähnten Kurzschlußstrom ein, derart, daß der Spanndraht 29 schmilzt und reißt. Dadurch entfällt die axiale Haltekraft zwischen den beiden Stütz- bzw. Federtellern 26, 27. Folglich bewegt der sich entlastende Federspeicher S gemäß den Fig. 1-2 bzw. der aufgeladene oder aktivierte Energiespeicher E gemäß Fig. 4 den kreiszylindrischen Außenzylinder 19 und das an letzterem abgestützte Kopfanlageteil 12 in Ausfahrrichtung z nach außen, so daß der Zustand gemäß Fig. 3 erreicht ist, in welcher das ausgefahrene Kopfanlageteil 12 strichpunktiert dargestellt ist.

Eine aus Fig. 1 ersichtliche Schwenklagerkonsole 31 bildet zwei Lageraugen 32 zur Aufnahme je eines Lagerzapfens 33 zwecks Schwenklagerung je eines Schwenk-arms 34.

Jeder Schwenkarm 34 ist durch eine Federrückstellkraft entsprechend den Pfeilen F, beispielsweise einer Wickel- oder Schenkelfeder, so belastet, daß der jeweilige Schwenkarm 34 bestrebt ist, mit Bezug auf den das jeweilige Lagerauge 32 bildenden Konsolenbereich 35 eine geradlinig gestreckte Stützlage einzunehmen, die durch einen nicht dargestellten Drehanschlag zwischen 34 und 35 stabilisiert ist. Jeweils zwei Schwenkarme 34 sind über einen Steg 36 einstückig miteinander verbunden.

Im Zusammenhang der Fig. 1-4 ist vorstellbar, daß in der ausgefahrenen Position des Federspeichers S bzw. des Energiespeichers E (Fig. 3) die sich in ihrer gestreckten Stützstellung befindenden Schwenkarme 34 eine der Ausfahrrichtung z entgegengesetzte Bewegung des Kopfanlageteil 12 zurück zum Hauptkörper 11 wirksam verhindern, da sich die z.B. ballig ausgebildeten Enden 37 der Schwenkarme 34 jeweils am Boden 21 des topfförmigen Halteteils 22 abstützen.

Ergänzend sei erwähnt, daß aus Gründen einer Zeichnungsvereinfachung in den Fig. 1 und 4 die Schwenkarme 34 nicht gezeigt sind. Auch wurde z.B. die Gesamtanordnung des Federspeichers S mit den Zylindern 16, 19 bzw. der Energiespeicher E in Fig. 3 nicht gezeigt.

In Fig. 1 ist noch angedeutet, daß am Hauptkörper 11 und am Kopfanlageteil 12 vorgesehene und miteinander kooperierende Rastzähne 38, 39 zwar ein Aufschieben des Kopfanlageteil 12 auf den Hauptkörper 11 gestatten, jedoch ein unbeabsichtigtes Abziehen des Kopfanlageteil 12 vom Hauptkörper 11 verhindern.

Wie bereits weiter oben erwähnt, kann die Kopfstütze 10 mit einer Vorrichtung zur Horizontalverstellung entlang der Achse x oder entlang einer zur Achse x geneigten Richtung versehen sein. Dazu würden, etwa entsprechend der DE-C2-31 09 592 oder der DE-C2-33 35 497 tragstangenseitig (z.B. am Joch 14) einerseits und am Kopfstützenkörper K andererseits die relativ zueinander verstellbaren Bauteile (z.B. Zahnstange und Ritzel) angeordnet sein.

Die kopfstützenseitige Kopfanlagefläche ist mit 40 bezeichnet.

Gemäß Fig. 4 ist anstelle des mechanischen Federspeichers S der Fig. 1 und 2 in dem zentralen Hohlraum H der beiden rohrartigen Körper 16, 19 ein mechanischer Energiespeicher E angeordnet, welcher eine Kolben-Zylindereinheit 42 aufweist. Die Kolben-Zylindereinheit 42 besitzt einen Hohlkolben 43, dessen kreisringscheibenartiges Kolbenteil A in dem Zylinderinnenraum 45 eines Zylinders 46 angeordnet ist, aus dessen Zylinderboden B eine mehr schematisch dargestellte kunststoffumhüllte Treibladung 47 in den Zylinderinnenraum 45 und in den Hohlraum 48 des Hohlkolbens 43 hineinragt.

Die Treibladung 47 kann über zwei elektrische Leitungen 49, 50 gezündet werden. Dies hat zur Folge, daß der Hohlkolben 43 unter der Wirkung des Treibgases über seinen gabelkopfartigen Stößel 44 und über den Stützteller 26 den kreiszylindrischen Außenzylinder 19, damit also auch das Kopfanlageteil 12, nach links in Richtung z verlagert. Das bei diesem Vorgang erzeugte Treibgas kann zugleich als Rücklaufsperre verwandt werden, welche verhindert, daß das Kopfanlageteil 12 ohne weiteres aus seiner ausgefahrenen Stützposition (Fig. 3) in die Ausgangsposition gemäß Fig. 4 zurückbewegt werden kann.

## Patentansprüche

1. Kopfstütze (10) für Kraftfahrzeugsitze, mit einem relativ zu einem Hauptkörper (11) der Kopfstütze (10) entlang einer Linearbewegungsrichtung (bei z) beweglich am Hauptkörper (11) geführten, eine Kopfanlagefläche (40) aufweisenden Kopfanlageteil (12), welches ausschließlich durch die Energieentlastung mindestens eines entgegen dem Ausfahrsinn des Kopfanlageteils verspannbaren mechanischen Federspeichers (S) nach vorn zum Hinterkopf des Fahrzeuginsassen bewegbar ist, wobei zur Linearbewegung des Kopfanlageteils (12) zwei zylindrische rohrartige Körper (19, 16) teleskopierend ineinander angeordnet und relativ zueinander beweglich sind, **dadurch gekennzeichnet, daß** der mechanische Federspreicher (S) in dem zentralen Hohlraum (H) der beiden rohrartigen Körper (16, 19) angeordnet und auf zwei in der Linearbewegungsrichtung (bei z ) distanziert voneinander angeordneten Boden- oder Abstützflächen (26, 27) innerhalb der beiden rohrartigen Körper (16, 19) abgestützt ist.

2. Kopfstütze nach Anspruch 1, **dadurch gekennzeichnet, daß** die beiden rohrartigen Körper (16, 19) zylindrische Rohre, insbesondere kreiszylindrische Zylinderrohre sind.

3. Kopfstütze nach Anspruch 2, **dadurch gekennzeichnet, daß** das Speichermedium des mechanischen Federspeichers (S) von einer einzigen Schraubendruckfeder (41) gebildet ist, welche in koaxialer Anordnung im Hohlraum (H) der beiden Zylinderrohre (16, 19) aufgenommen ist.

4. Kopfstütze nach einem der Ansprüche 1 bis 3, **gekennzeichnet durch** Mittel (29, 30), welche den mechanischen Federspeicher (S) in seiner gespannten Lage halten.

5. Kopfstütze nach Anspruch 4, **dadurch gekennzeichnet, daß** den Mitteln (29, 30), welche den mechanischen Federspeicher (S) in seiner gespannten Lage halten, Verriegelungsmittel zugeordnet sind oder die Mittel (29, 30) Verriegelungsmittel (29) enthalten.

6. Kopfstütze nach Anspruch 5, **dadurch gekennzeichnet, daß** die Verriegelungsmittel (29) mittels eines im Zusammenhang mit einem Crashgeschehen wirksamen Sensors entriegelbar sind, derart, daß sich der Federspeicher (S) entspannt und dabei das Kopfanlageteil (12) in Ausfahrrichtung (z) in Richtung Hinterkopf des Fahrzeuginsassen bewegen kann.

7. Kopfstütze nach einem der Ansprüche 4 bis 6, **dadurch gekennzeichnet, daß** das Verriegelungsmittel, welches den Federspeicher (S) in seiner gespannten Lage hält, von einem Spanndraht (29) gebildet ist, welcher im Zusammenhang mit einem Crashgeschehen von einem elektrischen Strom beaufschlagbar ist, derart, daß die dabei entstehende Stromwärme den Spanndraht (29) zum Schmelzen und Reißen bringt.

8. Kopfstütze nach einem der Ansprüche 1 bis 7, **dadurch gekennzeichnet, daß** entweder der Hauptkörper (11) der Kopfstütze (10) oder das bewegliche Kopfanlageteil (12) Stützmittel (34) enthält, welche zumindest bei Erreichen der am weitesten ausgefahrenen Relativposition des Kopfanlageteils (12) bezüglich des Hauptkörpers (11) das Kopfanlageteil (12) und den Hauptkörper (11) voneinander arretierend distanzieren.

9. Kopfstütze nach Anspruch 8, **dadurch gekennzeichnet, daß** innen am Hauptkörper (11) oder am Kopfanlageteil (12) mindestens ein bei Spannstellung des Federspeichers (S) eingeschwenkter Schwenkarm (34) vorgesehen ist, welcher bei Erreichen der ausgefahrenen Endlage des Kopfanlageteils (12) durch eine Federrückstellkraft (F) in eine eine Wiederannäherung des Kopfanlageteils (12) hin zum Hauptkörper (11) verhindernde gestreckte Stützlage versetzbar ist.

10. Kopfstütze nach einem der Ansprüche 1 bis 9, **gekennzeichnet durch** die Zuordnung einer Horizontalverstellung.

11. Kopfstütze nach Anspruch 10, **dadurch gekennzeichnet, daß** die Horizontalverstellung eine Bewegbarkeit des Kopfanlageteils (12) unter Einbeziehung des Federspeichers (S) jeweils teilweise bzw. über einen Teil des Federweges entweder in dessen Spannsinn oder in dessen Entspannungssinn enthält.

12. Kopfstütze nach Anspruch 10, **dadurch gekennzeichnet, daß** das Kopfanlageteil (12) mitsamt dem gespannten Federspeicher, welcher sich einenends innen am Kopfanlageteil (12) und andernends an einem mit dem Hauptkörper (11) verbundenen Widerlager (27) abstützt, gemeinsam mit dem Kopfanlageteil (12) und dem Widerlager (27) nach vorn und zurück (entlang x) verstellbar ist.

13. Kopfstütze nach einem der Ansprüche 10 bis 12, **dadurch gekennzeichnet, daß** die Horizontalverstellung eine Verstellung der Kopfstütze (10) bezüglich ihrer Basis (13) nach vorn und zurück beinhaltet.

14. Kopfstütze nach einem der Ansprüche 10 bis 13, **dadurch gekennzeichnet, daß** die Horizontalverstellung in Verbindung mit einem Crashgeschehen entweder von sich aus selbsttätig oder durch andere Mittel arretierbar ist.

15. Kopfstütze nach einem der Ansprüche 1 bis 14, **dadurch gekennzeichnet, daß** eine kopfstützenintern oder sitzlehnenseitig ausgebildete Höhenverstellung der Kopfstütze (10) im Zusammenhang mit einem Crashgeschehen selbsttätig oder durch andere Mittel arretierbar ist.

16. Kopfstütze nach einem der Ansprüche 1 bis 15, **dadurch gekennzeichnet, daß** die Arretierungsmittel der Horizontal- und/oder Höhenverstellung unabhängig von einem Crashgeschehen zusätzlich aktivierbar sind.

17. Kopfstütze nach einem der Ansprüche 1 bis 16, **dadurch gekennzeichnet, daß** anstelle des mechanischen Federspeichers (S) ein mechanischer Energiespeicher (E) eingesetzt wird, der eine im zentralen Hohlraum (H) der beiden rohrartigen Körper (16, 19) angeordnete Kolben-Zylindereinheit (42) aufweist, deren Zylinderinnenraum (45) mindestens mittelbar von einem Speichermedium zur Bewegung des Kolbens (43) und/oder des Zylinders (46) im Ausfahrsinne (bei z) des Kopfanlageteils (12) beaufschlagbar ist.

18. Kopfstütze nach Anspruch 17, **dadurch gekennzeichnet, daß** der Zylinderinnenraum (45) mindestens mittelbar von dem Gasstrom einer Gasquelle (47) beaufschlagbar ist.

19. Kopfstütze nach Anspruch 18, **dadurch gekennzeichnet, daß** die Gasquelle (47) der Kolben-Zylindereinheit (42) unmittelbar zugeordnet oder von letzterer entfernt angeordnet ist.

20. Kopfstütze nach einem der Ansprüche 17 bis 19, **dadurch gekennzeichnet, daß** der Gasstrom unmittelbar auf den Zylinderinnenraum (45) wirkt.

21. Kopfstütze nach einem der Ansprüche 17 bis 19, **dadurch gekennzeichnet, daß** der Gasstrom mittelbar über eine hydraulische Verbindung auf den Zylinderinnenraum (45) wirkt

22. Kopfstütze nach einem der Ansprüche 17 bis 21, **dadurch gekennzeichnet, daß** die Gasquelle ein vorgespannter Gasspeicher ist.

23. Kopfstütze nach einem der Ansprüche 17 bis 22, **dadurch gekennzeichnet, daß** die Gasquelle (47) in Form chemisch gebundener Energie vorliegt.

24. Kopfstütze nach einem der Ansprüche 1 bis 23, **dadurch gekennzeichnet, daß** die mechanische Wirkungsachse des Federspeichers (S) oder des mechanischen Energiespeichers (E) von der Linearbewegungsrichtung (bei z) unterschiedlich ist und der Federspeicher (S) oder der mechanische Energiespeicher (E) über eine mechanische Bewegungskupplung mit dem Kopfanlageteil (12) verbunden ist.

25. Kopfstütze nach Anspruch 24, **dadurch gekennzeichnet, daß** die mechanische Bewegungskupplung eine Untersetzung oder eine Übersetzung enthält.

26. Kopfstütze nach einem der Ansprüche 6 bis 25, **dadurch gekennzeichnet, daß** der bei einem Crashgeschehen wirksame Sensor sitzlehnenseitig in Höhe des Hüftgelenkdrehpunkts, nämlich des sogenannten H-Punkts, des Fahrzeuginsassen angeordnet ist.

## Claims

1. Head rest (10) for motor vehicle seats, comprising a head contact part (12), which is guided relative to a main body (11) of the head rest (10) movably on the main body (11) along a direction of linear motion (at z) and comprises a head contact surface (40) and is movable forward towards the back of the head of the vehicle passenger exclusively through the energy discharge of at least one mechanical spring store (S), which is braceable counter to the direction of extension of the head contact part, wherein for the linear motion of the head contact part (12) two cylindrical tubular bodies (19, 16) are disposed telescopically one in the other and are moveable relative to one another, **characterized in that** the mechanical spring store (S) is disposed in the central cavity (H) of the two tubular bodies (16, 19) and supported inside the two tubular bodies (16, 19) against two bottom or supporting surfaces (26, 27) spaced apart from one another in the direction of linear motion (at z).

2. Head rest according to claim 1, **characterized in that** the two tubular bodies (16, 19) are cylindrical tubes, in particular circular-cylindrical cylinder tubes.

3. Head rest according to claim 2, **characterized in that** the storage medium of the mechanical spring store (S) is formed by a single helical compression spring (41), which is received in a coaxial arrangement in the cavity (H) of the two cylinder tubes (16, 19).

4. Head rest according to one of claims 1 to 3, **characterized by** means (29, 30), which hold the mechanical spring store (S) in its tensioned position.

5. Head rest according to claim 4, **characterized in that** locking means are associated with the means (29, 30) of holding the mechanical spring store (S) in its tensioned position or the means (29, 30) comprise locking means (29).

6. Head rest according to claim 5, **characterized in that** the locking means (29) are unlockable by means of a sensor, which is active in connection with a crash situation, such that the tension of the spring store (S) is released and so the head contact part (12) may move in extension direction (z) towards the back of the head of the vehicle passenger.

7. Head rest according to one of claims 4 to 6, **characterized in that**. the locking means, which holds the spring store (S) in its tensioned position, is formed by a bracing wire (29), which in connection with a crash situation is loadable with an electric current such that the Joule heat then arising causes the bracing wire (29) to melt and break.

8. Head rest according to one of claims 1 to 7, **characterized in that** either the main body (11) of the head rest (10) or the movable head contact part (12) comprises supporting means (34) which, at least upon attainment of the most extended position of the head contact part (12) relative to the main body (11), distance the head contact part (12) and the main body (11) from one another in a locked manner.

9. Head rest according to claim 8, **characterized in that** provided on the inside of the main body (11) or of the head contact part (12) is at least one swivel arm (34), which is swivelled inward in the tensioned position of the spring store (S) and which, upon attainment of the extended end position of the head contact part (12), is displaceable by a spring restoring force (F) into a straight support position, which prevents the head contact part (12) from moving back towards the main body (11).

10. Head rest according to one of claims 1 to 9, **characterized by** the association of a horizontal adjustment.

11. Head rest according to claim 10, **characterized in that** the horizontal adjustment comprises a mobility of the head contact part (12) including the spring store (S) in each case partially and/or over part of the spring excursion either in the tensioning direction or in the tension releasing direction of the latter.

12. Head rest according to claim 10, **characterized in that** the head contact part (12) together with the tensioned spring store, which is supported at one end against the inside of the head contact part (12) and at the other end against an abutment (27) connected to the main body (11), is adjustable forward and back (along x) jointly with the head contact part (12) and the abutment (27).

13. Head rest according to one of claims 10 to 12, **characterized in that** the horizontal adjustment comprises a forward and backward adjustment of the head rest (10) in relation to its base (13).

14. Head rest according to one of claims 10 to 13, **characterized in that** in connection with a crash situation the horizontal adjustment is lockable either automatically by itself or by other means.

15. Head rest according to one of claims 1 to 14, **characterized in that** in connection with a crash situation a vertical adjustment of the head rest (10) effected inside the head rest or at the seat back is lockable automatically or by other means.

16. Head rest according to one of claims 1 to 15, **characterized in that** the locking means of the horizontal and/or vertical adjustment are additionally activatable independently of a crash situation.

17. Head rest according to one of claims 1 to 16, **characterized in that** instead of the mechanical spring store (S) a mechanical energy store (E) is used, which comprises a piston-cylinder unit (42), which is disposed in the central cavity (H) of the two tubular bodies (16, 19) and the cylinder interior (45) of which is loadable at least indirectly by a storage medium for moving the piston (43) and/or the cylinder (46) in the direction of extension (at z) of the head contact part (12).

18. Head rest according to claim 17, **characterized in that** the cylinder interior (45) is loadable at least. indirectly by the gas stream of a gas source (47).

19. Head rest according to claim 18, **characterized in that** the gas source (47) is directly associated with the piston-cylinder unit (42) or disposed remote from the latter.

20. Head rest according to one of claims 17 to 19, **characterized in that** the gas stream acts directly upon the cylinder interior (45).

21. Head rest according to one of claims 17 to 19, **characterized in that** the gas stream acts indirectly via a hydraulic connection upon the cylinder interior (45).

22. Head rest according to one of claims 17 to 21, **characterized in that** the gas source is a prestressed gas accumulator.

23. Head rest according to one of claims 17 to 22, **characterized in that** the gas source (47) is in the form of chemically bound energy.

24. Head rest according to one of claims 1 to 23, **characterized in that** the axis of mechanical action of the spring store (S) or of the mechanical energy store (E) differs from the direction of linear motion (at z) and the spring store (S) or the mechanical energy store (E) is connected by a mechanical motional coupling to the head contact part (12).

25. Head rest according to claim 24, **characterized in that** the mechanical motional coupling comprises a motion-reducing or a motion-increasing ratio.

26. Head rest according to one of claims 6 to 25, **characterized in that** the sensor active in a crash situation is disposed in the seat back at the level of the hip-joint pivot point, namely the so-called H-point, of the vehicle passenger.

## Revendications

1. Appui-tête (10) pour sièges de véhicules automobiles, avec une partie d'appui de tête (12) présentant une surface d'appui de tête (40), guidée de façon mobile sur le corps principal (11) par rapport à un corps principal (11) de l'appui-tête (10), le long d'un dispositif de déplacement linéaire (en z), la partie d'appui de tête (12) étant déplaçable exclusivement sous l'effet d'une décharge d'énergie, au moins d'un accumulateur de force (S) mécanique, tendu à l'encontre du sens de déploiement de la partie d'appui de tête, le déplacement se faisant vers l'avant, vers l'arrière de la tête du passager du véhicule, où, pour assurer le déplacement linéaire de la partie d'appui de tête (12), sont disposés télescopiquement l'un à l'intérieur de l'autre deux corps tubulaires (19, 16) cylindriques et mobiles l'un par rapport à l'autre, **caractérisé en ce que** l'accumulateur à ressort (S) mécanique est disposé dans l'espace creux (H) central des deux corps tubulaires (16, 19) et prend appui sur deux surfaces de fond ou d'appui (26, 27), disposées à distance l'une de l'autre dans la direction de déplacement linéaire (en z) à l'intérieur des deux corps (16, 19) tubulaires.

2. Appui-tête selon la revendication 1, **caractérisé en ce que** les deux corps tubulaires (16, 19) sont des tubes cylindriques, en particulier des tubes cylindriques à section transversale circulaire.

3. Appui-tête selon la revendication 2, **caractérisé en ce que** le milieu de stockage de l'accumulateur élastique (S) mécanique est formé par un ressort hélicoïdal de compression (41) unique, logé coaxialement dans l'espace creux (H) des deux tubes cylindriques (16, 19).

4. Appui-tête selon l'une des revendications 1 à 3, **caractérisé par** des moyens (29, 30) maintenant à sa position serrée l'accumulateur de force (S) mécanique.

5. Appui-tête selon la revendication 4, **caractérisé en ce qu'**aux moyens (29, 30), qui maintiennent l'accumulateur de force (S) mécanique à sa position serrée, sont associés des moyens de verrouillage, ou bien les moyens (29, 30) comprennent des moyens de verrouill'age (29).

6. Appui-tête selon la revendication 5, **caractérisé en ce que** les moyens de verrouillage (29) sont déverrouillables à l'aide d'un capteur agissant en liaison avec une situation de collision, de manière que l'accumulateur à ressort (S) soit détendu et que, alors, la partie d'appui-tête (12) puisse se déplacer dans la direction de déploiement (z), dans la direction de l'arrière de la tête du passager du véhicule.

7. Appui-tête selon l'une des revendications 4 à 6, **caractérisé en ce que** le moyen de verrouillage qui maintient à sa position serrée l'accumulateur de force (S) est formé par un fil tendeur (29) sollicité par un courant électrique, en liaison avec une situation de collision, de manière que la chaleur produite par le courant mette en fusion le fil de serrage (29) et aboutisse à sa rupture.

8. Appui-tête selon l'une des revendications 1 à 7, **caractérisé en ce que** soit le corps principal (11) de l'appui-tête (10), soit la partie d'appui de tête (12) mobile contient des moyens d'appui (34) qui, au moins lors de l'atteinte de la position relative de déploiement maximal de la partie d'appui de tête (12) par rapport au corps principal, écarte l'un de l'autre avec un effet de blocage la partie d'appui de tête (12) et le corps principal (11).

9. Appui-tête selon la revendication 8, **caractérisé en ce que**, intérieurement, sur le corps principal (11) ou sur la partie d'appui de tête (12), est prévu au moins un bras pivotant (34) qui, lorsque l'accumulateur à ressort (S) est en position tendue, est introduit par pivotement, bras pivotant qui, à l'atteinte de la position finale déployée de la partie d'appui de tête (12), est déplaçable, à l'aide d'une force de rappel élastique (F), en une position d'appui étiré, empêchant toute approche supplémentaire de la partie d'appui de tête (12) par rapport au corps principal (11).

10. Appui-tête selon l'une des revendications 1 à 9, **caractérisé par** l'association d'un dispositif de réglage horizontal.

11. Appui-tête selon la revendication 10, **caractérisé en ce que** le dispositif de réglage horizontal présente une mobilité de la partie d'appui de tête (12) en impliquant l'accumulateur à ressort (S) chaque fois partiellement ou bien sur une partie de la course élastique, soit dans son sens de serrage, soit dans son sens de desserrage.

12. Appui-tête selon la revendication 10, **caractérisé en ce que** la partie d'appui de tête (12) avec l'accumulateur à ressort serré, qui prend appui, à une extrémité, intérieurement sur la partie d'appui de tête (12) et, à l'autre extrémité, sur une contre-palier (27) relié au corps principal (11), est réglable, conjointement avec la partie d'appui de tête (12) et le contre-palier (27), vers l'avant et retour (dans la direction x).

13. Appui-tête selon l'une des revendications 10 à 12, **caractérisé en ce que** le dispositif de réglage horizontal contient un dispositif de réglage de l'appui-tête (10) par rapport à sa base (13), vers l'avant et retour.

14. Appui-tête selon l'une des revendications 10 à 13, **caractérisé en ce que** le dispositif de réglage horizontal est susceptible d'être bloqué en liaison avec une situation de collision, soit de lui-même automatiquement, soit du fait d'autres moyens.

15. Appui-tête selon l'une des revendications 1 à 14, **caractérisé en ce qu'**un dispositif de réglage en hauteur, réalisé de façon interne à l'appui-tête ou bien du côté dossier, de l'appui-tête (10) peut être bloqué en liaison avec une situation de collision, automatiquement, ou du fait d'autres moyens.

16. Appui-tête selon l'une des revendications 1 à 15, **caractérisé en ce que** les moyens de blocage du dispositif de réglage horizontal et/ou en hauteur sont activables en plus indépendamment d'une situation de collision.

17. Appui-tête selon l'une des revendications 1 à 16, **caractérisé en ce qu'**au lieu de l'accumulateur de force (S) mécanique est utilisé un accumulateur d'énergie (E) mécanique, présentant une unité à piston et cylindre (42) disposée dans l'espace creux (H) central des deux corps tubulaires (16, 19), ensemble à piston et cylindre dont l'espace intérieur de cylindre (45) peut être sollicité au moins indirectement par un fluide de stockage, afin de déplacer le piston (43) et/ou le cylindre (46) dans le sens du déploiement (en z) de la partie d'appui de tête (12).

18. Appui-tête selon la revendication 17, **caractérisé en ce que** l'espace intérieur de cylindre (45) est susceptible d'être sollicité, au moins indirectement, par le flux de gaz venant d'une source de gaz (47).

19. Appui-tête selon la revendication 18, **caractérisé en ce que** la source de gaz (47) de l'unité à piston et cylindre (42) est associée directement ou disposée à distance de cette dernière.

20. Appui-tête selon l'une des revendications 17 à 19, **caractérisé en ce que** le flux de gaz agit directement sur l'espace intérieur de cylindre (45).

21. Appui-tête selon l'une des revendications 17 à 19, **caractérisé en ce que** le flux de gaz agit indirectement sur l'espace intérieur de cylindre (45), par l'intermédiaire d'une liaison hydraulique.

22. Appui-tête selon l'une des revendications 17 à 21, **caractérisé en ce que** la source de gaz est un accumulateur de gaz précontraint.

23. Appui-tête selon l'une des revendications 17 à 22, **caractérisé en ce que** la source de gaz (47) se présente sous la forme d'une énergie de liaison chimique.

24. Appui-tête selon l'une des revendications 1 à 23, **caractérisé en ce que** l'axe d'action mécanique de l'accumulateur à ressort (S) ou de l'accumulateur d'énergie (E) mécanique est différent de la direction de déplacement linéaire (en z), et l'accumulateur à ressort (S) ou l'accumulateur d'énergie (E) mécanique est relié à la partie d'appui de tête (12), par l'intermédiaire d'un accouplement cinématique mécanique.

25. Appui-tête selon la revendication 24, **caractérisé en ce que** l'accouplement cinématique mécanique contient un dispositif réducteur ou multiplicateur.

26. Appui-tête selon l'une des revendications 6 à 25, **caractérisé en ce que** le capteur agissant en cas de situation de collision est disposé côté dossier, au niveau du centre de rotation de l'articulation de hanche, précisément ce que l'on appelle le point H des passagers du véhicule.
